# EUROPEAN PATENT APPLICATION

(11) **EP 2 928 068 A2**
(43) Date of publication of application: **07.10.2015**
(21) Application number: 15156497.8
(22) Date of filing: 25.02.2015
(51) Int. Cl.: H02P 9/48, B64B 1/00, H02J 1/00

(54) **Systems utilizing a controllable voltage AC generator system**

(30) Priority: 02.04.2014 US 201414243189
(71) Applicant: Hamilton Sundstrand Corporation, Charlotte, NC 28217 (US)
(72) Inventor: Himmelmann, Richard A., Beloit, WI 53511 (US)
(74) Representative: Hughes, Andrea Michelle

(57) **Abstract**

An aircraft taxi system (100) includes a controllable voltage AC generator (103) configured to be connected to a power generation turbine shaft (102) and configured to convert rotational energy to electrical energy, wherein the controllable voltage AC generator (103) is configured to output a desired voltage irrespective of a change in a rotational speed of the power generation turbine shaft (102), an AC electric motor (105) configured to rotate at least one wheel of an aircraft landing gear, and an AC bus connecting the controllable voltage AC generator to each of the AC electric motor.

## Description

### BACKGROUND

### 1. Field

The present disclosure relates to systems using electric motors, more specifically to AC electric motors used in vehicles.

### 2. Description of Related Art

Aircraft taxi systems can include electrical systems configured to operate using electricity generated by a power generation turbine, e.g., an auxiliary power unit (APU). Traditional electrically driven AC powered motors require an AC-DC-AC conversion system to control the speed of the motors independently of the speed of the power generation turbine. While such a system allows for taxiing, they add substantial weight to the aircraft.

Such conventional methods and systems have generally been considered satisfactory for their intended purpose. However, there is still a need in the art for a system that allows for the efficient use of electric motors in an aircraft taxi system. The present disclosure provides a solution for this problem.

### SUMMARY

An aircraft taxi system includes a controllable voltage AC generator that is configured to be connected to convert rotational energy to electrical energy (e.g., powered by a power generation turbine shaft). The controllable voltage AC generator is configured to output a desired voltage irrespective of a change in a rotational speed of the power generation turbine shaft. An AC electric motor is configured to rotate at least one wheel of an aircraft landing gear. An AC electric bus connects the controllable voltage AC generator to the AC electric motor for driving the motor.

In some embodiments, the system can further include a power generation turbine operatively connected to the controllable voltage AC generator and configured to convert energy of an exhaust gas to rotational energy of a power generation turbine shaft.

The system can further include a controller configured to control the controllable voltage AC generator to output the desired voltage. The controller can have a feedback system for determining at least one of a speed of the AC electric motor, a speed of the wheel, a torque of the AC electric motor, or a linear velocity of the aircraft, and can be operative to modify the voltage of the controllable voltage AC generator to achieve at least one of a desired motor speed, a desired wheel speed, a desired torque, or a desired aircraft velocity.

In at least one aspect of this disclosure, a method includes controlling an output voltage of a controllable voltage generator attached to a power generation turbine of an aircraft that is configured to convert energy of an exhaust gas to rotational energy of a power generation turbine shaft and allowing the controlled output voltage to power an AC electric motor disposed in the aircraft. The AC electric motor can be any suitable electric motor (e.g., an induction motor and/or any other suitable electric motor that is configured to tolerate slip).

The method can further include determining at least one of a speed of the AC electric motor, a speed of the wheel, a torque of the AC electric motor. In some embodiments, the method further includes modifying the voltage of the controllable voltage AC generator to achieve at least one of a desired motor speed, a desired wheel speed, a desired torque, or a desired aircraft velocity.

The method can further include increasing the output voltage if at least one of the speed of the AC electric motor, the speed of the wheel, the torque of the AC electric motor, or the linear velocity of the aircraft is determined to be below a desired speed.

The method can further include decreasing the output voltage if at least one of the speed of the AC electric motor, the speed of the wheel, the torque of the AC electric motor, or the linear velocity of the aircraft is determined to be above a desired speed. The method can further include actuating the controllable voltage AC generator to produce a constant voltage in response to a change in power generation turbine shaft speed.

In some embodiments, the method can further include controlling multiple AC electric motors of the aircraft independently of each other to produce the same or different wheel speeds on separate wheels. The method can further include controlling the speed of the AC electric motor of the aircraft independently of the speed of the power generation turbine shaft.

These and other features of the systems and methods of the subject disclosure will become more readily apparent to those skilled in the art from the following detailed description taken in conjunction with the drawings.

### BRIEF DESCRIPTION OF THE DRAWINGS

So that those skilled in the art to which the subject disclosure appertains will readily understand how to make and use the devices and methods of the subject disclosure without undue experimentation, embodiments thereof will be described by way of example and in detail herein below with reference to certain figures, wherein:
Fig. 1 is a partial, perspective schematic view of an embodiment of a taxi propulsion system in accordance with this disclosure;
Fig. 2 is a schematic view of an embodiment of a system in accordance with this disclosure; and
Fig. 3 is a perspective view of an embodiment of an aircraft with a taxi system in accordance with this disclosure.

### DETAILED DESCRIPTION

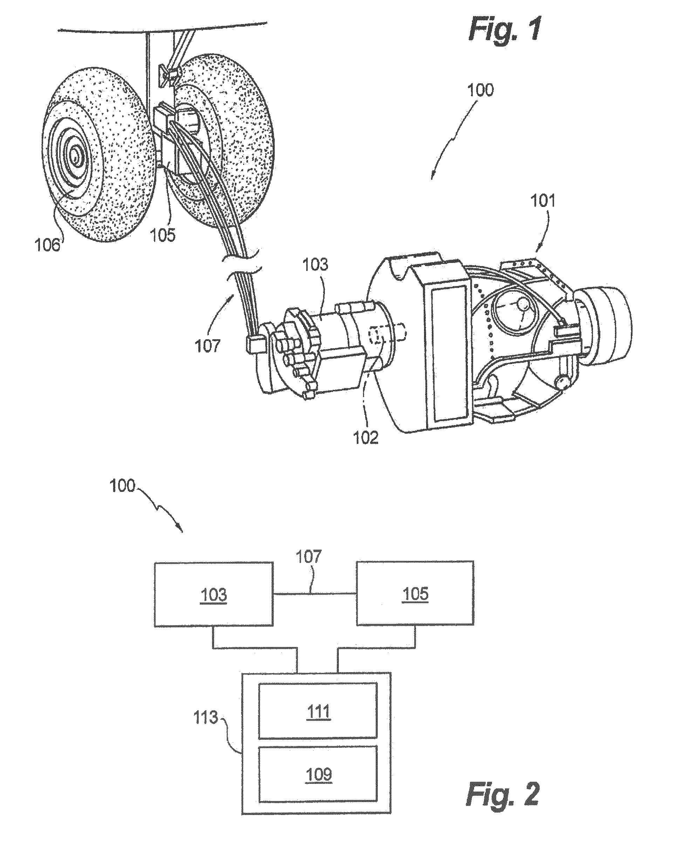

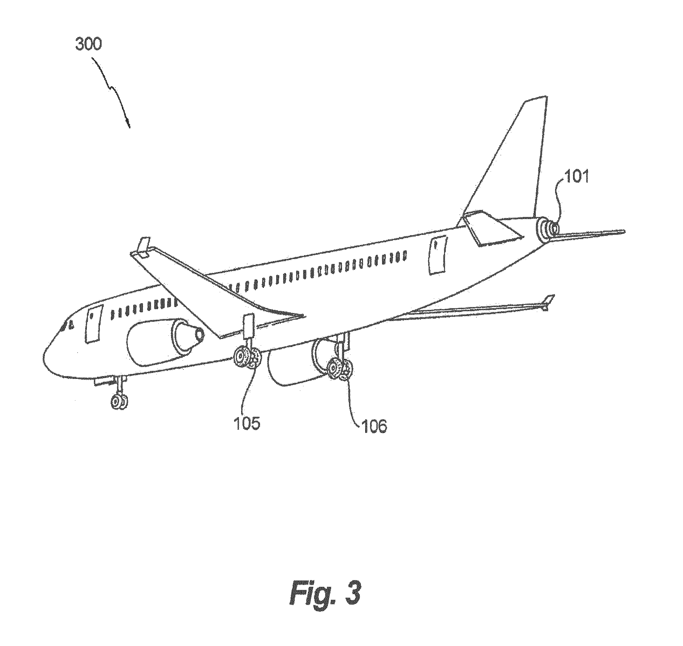

Reference will now be made to the drawings wherein like reference numerals identify similar structural features or aspects of the subject disclosure. For purposes of explanation and illustration, and not limitation, an exemplary embodiment of a system 100 in accordance with the disclosure is shown in Fig. 1. A systematic view of a system 100 is shown in Fig. 2 and is shown disposed on an aircraft 300 in Fig. 3. The systems and methods disclosed herein can be used to power and/or control wheels connected to an aircraft to taxi the aircraft on the ground, or for any other suitable purpose.

Referring to Figs. 1 and 2, in at least one aspect of this disclosure, a system 100 includes a controllable voltage AC generator 103 that is configured to be connected to a power generation turbine shaft 102 of a power generation turbine 101 (e.g., an APU or other aircraft powerplant) and is configured to convert rotational energy to electrical energy. The controllable voltage AC generator 103 can be any suitable controllable voltage generator configured to modify output voltage for a given rotation speed of the controllable voltage generator 103. For example, U.S. Patent No. 7,385,332 to Himmelmann discloses a suitable type of controllable voltage AC generator.

Non-limiting examples of a controllable voltage AC generator include: 1) a wound field machine that can have its excitation current (applied to the main stage rotor) increased or reduced to vary the amount of magnetic flux interacting with the main stage stator; 2) An induction generator that can increase or decrease the frequency of the excitation field (thereby changing the slip rate), which then changes the magnetic flux on the rotor, thereby changing the main stage output voltage; 3) a permanent magnet machine that can have the rotor axially displaced out of the stator thereby changing the effective stack length of the machine, which changes the amount of rotor flux reacting with the stator, thereby altering the output voltage; 4) a permanent magnet machine that can have a metal sleeve partially or fully inserted between the rotor and the stator (a magnetic shutter) effectively short circuiting the magnetic flux on the rotor, thereby changing how much flux interacts with the stator, thereby altering the machine output voltage; 5) a permanent magnet machine that can have a two piece rotor, axially split such that one half of the rotor can be rotated relative to the other, thereby cancelling out some of the magnetic flux interacting with the stator, thereby altering the output voltage; and 6) a permanent magnet machine that can incorporate control windings in the stator that can cause saturation, or can re-direct the magnetic flux away from the main stator coils, thereby changing the main stator output voltage.

The system 100 can further include at least one power generation turbine 101 configured to convert energy of an exhaust gas to rotational energy of a power generation turbine shaft 102 via the turbine blades. While the power generation turbine 101 is described herein as a gas turbine, it is contemplated that this generator 103 could be configured to operate with any other suitable power plant (e.g., a piston engine for piston powered aircraft).

The controllable voltage AC generator 103 can be configured to output a desired voltage irrespective of any change in rotational speed of the power generation turbine shaft 102. In this respect, the generator 103 can output a desired voltage even if the speed of the power generation turbine 101 changes due to fluctuating exhaust gas flow and/or other reasons, and the desired voltage can be raised or lowered independent of the speed of the power generation turbine 101.

The system 100 further includes at least one AC electric motor 105 configured to rotate one or more wheels 106 of the aircraft 300, and an AC bus 107 connecting the controllable voltage AC generator to each of the AC electric motors 105. The electric motor 105 can be any suitable electric motor configured to operate with alternating current (e.g., an induction motor and/or any other suitable electric motor configured to tolerate slip). The AC bus 107 can be any suitable connection to power the AC electric motor 105 (e.g., a three phase connection). The speed of the AC electric motor 105 can be monitored and/or limited by a motor controller 109 that is operatively connected to the motor 105 and/or one or more sensors (e.g., configured to sense one or more of torque, rotational speed of the motor and/or wheel, and/or an aircraft speed sensor) disposed therein via any suitable circuitry, hardware, and/or software.

The system 100 can further include a generator controller 111 configured to control the controllable voltage AC generator 103 to output the desired voltage. The generator controller 111 can have any suitable feedback system and/or be configured to communicate with the motor controller 109 such that the generator controller can determine at least one of a speed of the AC electric motor 105, a speed of the wheel 106, a torque of the AC electric motor 105, or a linear velocity of the aircraft 300. The generator controller 111 can be operative to modify the voltage of the controllable voltage AC generator to achieve at least one of a desired motor speed, a desired wheel speed, a desired torque, or a desired aircraft velocity.

The generator controller 111 can be configured to modify the output voltage in accordance with a predetermined algorithm implemented via any suitable circuitry, hardware, or software, or via any other suitable program. For example, if the generator controller 111 or motor controller 109 determines that at least one of a speed of the AC electric motor 105, a speed of the wheel 106, a torque of the AC electric motor 105, or a linear velocity of the aircraft 300 is insufficient, then the generator controller 111 can modify the controllable voltage AC generator 103 to output a higher voltage, and vice versa. The generator controller 111 can also be connected to the turbine 101 to determine a change in rotational speed of the turbine 101 such that the generator controller 111 can modify the output voltage setting of the generator 103 to maintain a constant/desired voltage output and/or anticipate the fluctuations of the turbine 101.

Referring to Fig. 2, a master controller 113 can include be included in system 100 such that the master controller 113 includes both the motor controller 109 and the generator controller 111 implemented as software modules. Alternatively, the motor controller 109 and the generator controller 111 can be independent of each other in any suitable manner.

Referring additionally to Fig. 3, the system 100 is partially shown implemented in an aircraft 300. Each controllable voltage generator 103 can be coaxially disposed on the power generation turbine shaft 102 or in any other suitable manner. For example, one or more generators 103 could also be connected to the turbine via a gearbox, or chains, belts, friction drives, or the like.

Multiple motors 105 can be controlled to have independently variable speed such that the motors 105 can produce differing amounts of torque connected to different wheels 106. This can be important if differing wheels are subject to differing resistance (e.g., one wheel in mud and others on pavement, worn bearings on one or more wheels and not others) to allow the plane to travel linearly at a desired speed. This can also be used to steer the aircraft 300.

In at least one aspect of this disclosure, a method includes controlling an output voltage of a controllable voltage generator 103 attached to a power generation turbine 101 of an aircraft 300 that is configured to convert energy of an exhaust gas to rotational energy of a power generation turbine shaft 102 and allowing the controlled voltage to power an AC electric motor 105 disposed in the aircraft 300. The AC electric motor 105 can be any suitable electric motor (e.g., an induction motor and/or any other suitable electric motor that is configured to tolerate slip).

The method can further include determining at least one of a speed of the AC electric motor 105, a speed of the wheel 106, a torque of the AC electric motor 105, or a speed of an aircraft 300. In some embodiments, the method further includes modifying the voltage of the controllable voltage AC generator 103 to achieve at least one of a desired motor speed, a desired wheel speed, a desired torque, or a desired aircraft velocity.

The method can include increasing the output voltage if at least one of the speed of the AC electric motor 105, the speed of the wheel 106, the torque of the AC electric motor 103, or the linear velocity of the aircraft 300 is determined to be below a desired speed.

The method can include decreasing the output voltage if at least one of the speed of the AC electric motor 105, the speed of the wheel 106, the torque of the AC electric motor 105, or the linear velocity of the aircraft 300 is determined to be above a desired speed. The method can include actuating the controllable voltage AC generator 103 to produce a constant voltage in response to a change in power generation turbine shaft speed.

In some embodiments, the method can further include controlling multiple AC electric motors 105 of the aircraft 300 independently of each other to produce the same or different wheel speeds on separate wheels 106. The method can further include controlling the speed of the AC electric motor 105 of the aircraft 300 independently of the speed of the power generation turbine shaft 102.

In some embodiments, the generator 103 can be configured to allow inclusion of a suitable active and/or passive rectifier that can siphon some of the electric power from the electric taxi system, allowing it to be used to power other pieces of equipment on the vehicle.

By utilizing the embodiments disclosed here, an electrically powered aircraft taxi system can be included on an airplane without complex and/or heavy electronics for converting or inverting electrical signals. This can result in considerable reduction in the weight of the existing systems and provide an overall aircraft efficiency increase.

Embodiments of methods and systems of the present disclosure, as described above and shown in the drawings, provide for a system for an aircraft with superior properties including a lightweight and efficient electronic taxi system. While the apparatus and methods of the subject disclosure have been shown and described with reference to embodiments, those skilled in the art will readily appreciate that changes and/or modifications may be made thereto without departing from the scope of the subject disclosure.

## Claims

1. An aircraft taxi system (100), comprising:
a controllable voltage AC generator (103) configured to be connected to a power generation turbine shaft (102) and configured to convert rotational energy to electrical energy, wherein the controllable voltage AC generator (103) is configured to output a desired voltage irrespective of a change in a rotational speed of the power generation turbine shaft (102);
an AC electric motor (105) configured to rotate at least one wheel (106) of an aircraft landing gear; and
an AC bus (107) connecting the controllable voltage AC generator (103) to the AC electric motor (105).

2. The system of claim 1, further comprising a controller (111) configured to control the controllable voltage AC generator (103) to output the desired voltage.

3. The system of claim 2, wherein the controller (111) includes a feedback system for determining at least one of a speed of the AC electric motor (105), a speed of the wheel (106), a torque of the AC electric motor (105), or a linear velocity of the aircraft, and is operative to modify the voltage of the controllable voltage AC generator (103) to achieve at least one of a desired motor speed, a desired wheel speed, a desired torque, or a desired aircraft velocity.

4. The system of claim 1, further comprising a power generation turbine (101) operatively connected to the controllable voltage AC generator (103) and configured to convert energy of an exhaust gas to rotational energy of a power generation turbine shaft (102).

5. A method, comprising:
controlling an output voltage of a controllable voltage generator (103) attached to a power generation turbine (101) of an aircraft that is configured to convert energy of an exhaust gas to rotational energy of a power generation turbine shaft (102); and
allowing the controlled voltage to power an AC electric motor (105) disposed on the aircraft.

6. The method of claim 5, further comprising determining at least one of a speed of the AC electric motor (105), a speed of the wheel (106), a torque of the AC electric motor (105), or a linear velocity of the aircraft.

7. The method of claim 6, further comprising, modifying the voltage of the controllable voltage AC generator (103) to achieve at least one of a desired motor speed, a desired wheel speed, a desired torque, or a desired aircraft velocity.

8. The method of claim 6, further comprising increasing the output voltage if at least one of the speed of the AC electric motor (105), the speed of the wheel (106), the torque of the AC electric motor (105), or the linear velocity of the aircraft is determined to be below a desired speed.

9. The method of claim 6, further comprising decreasing the output voltage if at least one of the speed of the AC electric motor (105), the speed of the wheel (106), the torque of the AC electric motor (105), or the linear velocity of the aircraft is determined to be above a desired speed.

10. The method of claim 5, further comprising actuating the controllable voltage AC generator (103) to produce a constant voltage in response to a change in power generation turbine shaft speed.

11. The method of claim 5, further comprising controlling multiple AC electric motors of the aircraft independently of each other to produce the same or different wheel speeds on separate wheels.

12. The method of claim 5, further comprising controlling the speed of the AC electric motor (105) of the aircraft independently of the speed of the power generation turbine shaft (102).
